# EUROPEAN PATENT APPLICATION

(11) **EP 4 818 860 A1**
(43) Date of publication of application: **07.10.2026**
(21) Application number: 25210910.3
(22) Date of filing: 23.10.2025
(51) Int. Cl.: G06F 3/0481, G06F 3/0482, G06F 3/0484, G06F 3/0488, G06F 3/04883, G06F 3/04886

(54) **DISPLAY METHOD, DISPLAY APPARATUS, AND STORAGE MEDIUM**

(30) Priority: 03.04.2025 CN 202510421607
(71) Applicant: Beijing Xiaomi Mobile Software Co., Ltd., Beijing 100085 (CN)
(72) Inventor: ZHANG, Ruxin, Beijing, 100085 (CN); LUO, Xi, Beijing, 100085 (CN); YUAN, Zhihui, Beijing, 100085 (CN); LIANG, Zhe, Beijing, 100085 (CN); GUO, Yanan, Beijing, 100085 (CN); GAO, Jin, Beijing, 100085 (CN); ZHOU, Zhong, Beijing, 100085 (CN)
(74) Representative: Dehns Germany Partnerschaft mbB

(57) **Abstract**

A display method, includes: in response to a first preset operation on a first application, displaying (101) key information of the first application by using a first target component, where the first application includes at least one of a target application whose application type satisfies a first condition or a target application whose running state satisfies a second condition, and the first target component is located at a first preset position on a display screen of the electronic device; and in response to at least one second preset operation on the first target component, sending (102) the key information of the first application and information associated with the key information to a second application, where the second application is displayed on a display interface of the display screen.

## Description

### TECHNICAL FIELD

The present invention relates to the field of electronic technology, and in particular to a display method, a display apparatus, an electronic device, a storage medium, and a program product.

### BACKGROUND

When users want to share contents that they are interested in to other users or various platforms, they often need to perform a plurality of operations to share the contents.

### SUMMARY

In order to overcome the problems in the related art, the present invention provides a display method, apparatus, device, storage medium and program product for an electronic device, so as to allow a user to share the key information of the application and information associated with the key information at any time by using simple operations while improving the utilization rate of the display screen, thus improving the efficiency and convenience of sharing information.

According to a first aspect of embodiments of the present invention, there is provided a display method, performed by an electronic device, and including:
in response to a first preset operation on a first application, displaying key information of the first application by using a first target component, where the first application includes at least one of a target application whose application type satisfies a first condition or a target application whose running state satisfies a second condition, and the first target component is located at a first preset position on a display screen of the electronic device; and
in response to at least one second preset operation on the first target component, sending the key information of the first application and information associated with the key information to a second application, where the second application is displayed on a display interface of the display screen.

In some embodiments, in response to the at least one second preset operation on the first target component, sending the key information of the first application and the information associated with the key information to the second application includes:

in response to a first operation on the first target component, displaying a first card in a floating manner on the display interface, where the first card includes target key information matching a preset title of the first card, and the target key information is determined from the key information of the first application and the information associated with the key information; and
in response to a second operation on the first card, sending the first card to the second application.

In some embodiments, the display method further includes:

in response to a third operation on the first target component, displaying a second card in a floating manner on the display interface, where the second card includes the key information of the first application and the information associated with the key information;
where a size of the second card is greater than a size of the first card.

In some embodiments, the display method further includes:
in response to a fourth operation on the second card, displaying the first application in a small window form on the display interface; and
in response to a fifth operation on the first application in the small window form, sending the first application in the small window form to the second application.

In some embodiments, the method further includes:
in response to the first card being displayed in a floating manner on the display interface, maintaining display of the key information of the first application in the first target component; or
in response to the second card being displayed in a floating manner on the display interface, removing the key information of the first application from the first target component.

In some embodiments, in response to the first preset operation on the first application, displaying the key information of the first application by using the first target component includes:
in response to the first preset operation, and key information of a third application being displayed in the first target component, moving the key information of the third application from the first target component to a second target component for display, and displaying the key information of the first application in the first target component;
where a priority of the first application is higher than a priority of the third application, the second target component is located at a second preset position on the display screen of the electronic device, and the second preset position is different from the first preset position.

In some embodiments, sending the key information of the first application and the information associated with the key information to the second application includes at least one of:
obtaining first information to be shared by converting the key information of the first application and the information associated with the key information into a format matching an edit box of the second application, and displaying the first information to be shared in the edit box; or
obtaining second information to be shared by converting the key information of the first application and the information associated with the key information into a format matching a dialog box of the second application, and displaying the second information to be shared in the dialog box.

In some embodiments, in response to the first preset operation on the first application, displaying the key information of the first application by using the first target component includes at least one of:
in response to switching from an application interface of the first application to an application interface of a fourth application and the first application being in a running state, displaying at least one of an identification of the first application or running information indicated by the running state by using the first target component;
in response to triggering a message reminder event of the first application, displaying at least one of an identification of the first application or prompt information indicated by the message reminder event by using the first target component; or
in response to triggering a preset function of the first application, displaying at least one of an identification of the first application or a function identification indicated by the preset function by using the first target component.

In some embodiments, in response to the first preset operation on the first application, displaying the key information of the first application by using the first target component includes:
in response to the first preset operation, obtaining the key information of the first application, where the key information of the first application includes identification information of the first application and data information of the first application;
displaying the identification information of the first application in the first target component of a first size by using a first animation; and
simultaneously displaying the identification information of the first application and the data information of the first application in the first target component of a second size by using a second animation;
where, the first size is less than the second size.

According to a second aspect of embodiments of the present invention, there is provided a display apparatus, including:
a first display module, configured to display key information of a first application by using a first target component in response to a first preset operation on the first application, where the first application includes at least one of a target application whose application type satisfies a first condition or a target application whose running state satisfies a second condition, and the target component is located at a first preset position on a display screen of an electronic device; and
a first execution module, configured to send the key information of the first application and information associated with the key information to a second application in response to at least one second preset operation on the first target component, where the second application is displayed on a display interface of the display screen.

In some embodiments, the first execution module is configured to:
in response to a first operation on the first target component, display a first card in a floating manner on the display interface, where the first card includes target key information matching a preset title of the first card, and the target key information is determined from the key information of the first application and the information associated with the key information; and
in response to a second operation on the first card, send the first card to the second application.

In some embodiments, the display apparatus further includes:
a second display module, configured to display a second card in a floating manner on the display interface in response to a third operation on the first target component, where the second card includes the key information of the first application and the information associated with the key information;
where a size of the second card is greater than a size of the first card.

In some embodiments, the display apparatus further includes:
a third display module, configured to display the first application in a small window form on the display interface in response to a fourth operation on the second card; and
a second execution module, configured to send the first application in the small window form to the second application in response to a fifth operation on the first application in the small window form.

In some embodiments, the display apparatus further includes:
a fourth display module, configured to maintain display of the key information of the first application in the first target component in response to the first card being displayed in a floating manner on the display interface; or
a removal module, configured to remove the key information of the first application from the first target component in response to the second card being displayed in a floating manner on the display interface.

In some embodiments, the first display module is configured to:
in response to the first preset operation, and key information of a third application being displayed in the first target component, move the key information of the third application from the first target component to a second target component for display, and display the key information of the first application in the first target component;
where a priority of the first application is higher than a priority of the third application, the second target component is located at a second preset position on the display screen of the electronic device, and the second preset position is different from the first preset position.

In some embodiments, the first execution module is further configured to perform at least one of:
obtaining first information to be shared by converting the key information of the first application and the information associated with the key information into a format matching an edit box of the second application, and displaying the first information to be shared in the edit box; or
obtaining second information to be shared by converting the key information of the first application and the information associated with the key information into a format matching a dialog box of the second application, and displaying the second information to be shared in the dialog box.

In some embodiments, the first display module is further configured to perform at least one of:
in response to switching from an application interface of the first application to an application interface of a fourth application and the first application being in a running state, displaying at least one of an identification of the first application or running information indicated by the running state by using the first target component;
in response to triggering a message reminder event of the first application, displaying at least one of an identification of the first application or prompt information indicated by the message reminder event by using the first target component; or
in response to triggering a preset function of the first application, displaying at least one of an identification of the first application or a function identification indicated by the preset function by using the first target component.

In some embodiments, the first display module is further configured to:
in response to the first preset operation, obtain the key information of the first application, where the key information of the first application includes identification information of the first application and data information of the first application;
display the identification information of the first application in the first target component of a first size by using a first animation;
simultaneously display the identification information of the first application and the data information of the first application in the first target component of a second size by using a second animation;
where, the first size is less than the second size.

According to a third aspect of embodiments of the present invention, there is provided a non-transitory computer-readable storage medium, including:
when the computer program or the instruction in the storage medium is executed by a processor, the steps of any display method in the first aspect are implemented.

The technical solutions provided by the embodiments of the present invention may have the following beneficial effects.

In the embodiments of the present invention, in response to a first preset operation on a first application, key information of the first application is displayed by using a first target component, where the first application includes a target application whose application type satisfies a first condition and/or whose running state satisfies a second condition, and the first target component is located at a first preset position of a display screen of an electronic device; and, in response to at least one second preset operation on the first target component, the key information of the first application and the information associated with the key information are sent to a second application, where the second application is displayed on a display interface of the display screen.

On the one hand, by displaying the key information of the application using the first target component, a more intuitive operation manner is provided to the user while improving the utilization rate of the display screen, thus reducing the user's operating burden; on the other hand, the space occupied by a floating window displayed in a fixed manner on the display screen is saved, and the user does not need to switch the current display interface to share the key information of the application and the information associated with the key information in real time and conveniently, thus improving the flexibility of the sharing function of the electronic device and improving the efficiency of information sharing.

It is to be understood that the foregoing general description and the following detailed description are exemplary and explanatory only and are not restrictive of the disclosure.

### BRIEF DESCRIPTION OF THE DRAWINGS

The accompanying drawings, which are incorporated in and constitute a part of the description, illustrate embodiments consistent with the present invention and, together with the description, serve to explain the principles of the present invention.
FIG. 1 is a schematic flow chart of a display method for an electronic device according to some embodiments of the present invention.
FIG. 2A is a schematic diagram of an interface display according to some embodiments of the present invention.
FIG. 2B is a schematic diagram of an interface display according to some embodiments of the present invention.
FIG. 3A is a schematic diagram of an interface display according to some embodiments of the present invention.
FIG. 3B is a schematic diagram of an interface display according to some embodiments of the present invention.
FIG. 4 is a schematic diagram of an interface display according to some embodiments of the present invention.
FIG. 5 is a block diagram of a display apparatus according to some embodiments of the present invention.
FIG. 6 is a structural block diagram of an electronic device 600 according to some embodiments of the present invention.

### DETAILED DESCRIPTION

Example embodiments will be described in detail here, with examples illustrated in the accompanying drawings. In the following description, when referring to the drawings, identical numerals in different figures represent identical or similar elements, unless otherwise indicated. The implementations described in the following example embodiments are not intended to represent all implementations consistent with the present invention. By contrast, they are merely examples of apparatus and methods consistent with certain aspects of the present invention, as detailed in the appended claims.

In the related art, the user often needs to perform a plurality of operations to share the contents. It not only increases the user's operating burden and reduces the efficiency of information sharing, but also is not conducive to improving the utilization rate of the screen. In order to overcome the problems in the related art, the present invention provides a display method, apparatus, device, storage medium and program product for an electronic device.

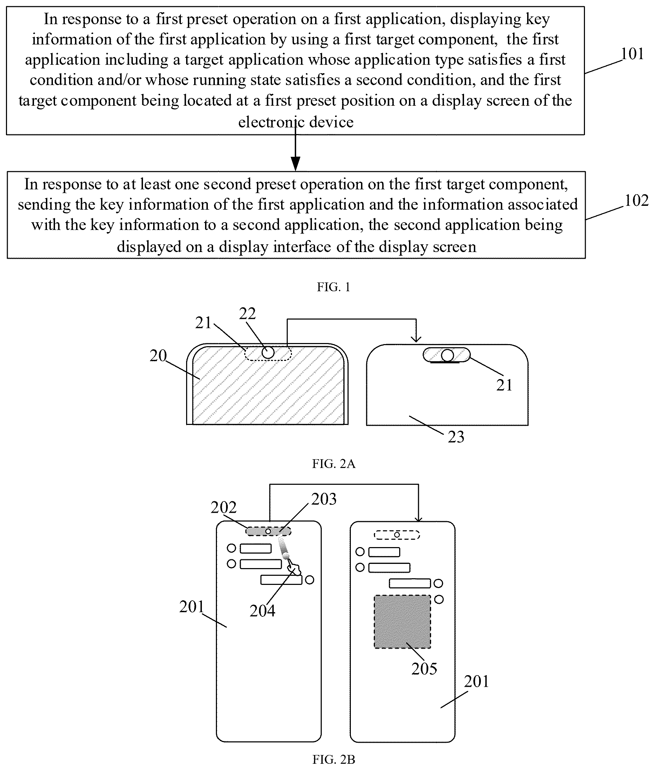

FIG. 1 is a schematic flow chart of a display method for an electronic device according to some embodiments of the present invention. As shown in FIG. 1, the display method mainly includes the following steps.

In step 101, in response to a first preset operation on a first application, key information of the first application is displayed by using a first target component, where the first application includes a target application whose application type satisfies a first condition and/or whose running state satisfies a second condition, and the first target component is located at a first preset position on a display screen of the electronic device;

In step 102, in response to at least one second preset operation on the first target component, key information of the first application and information associated with the key information are sent to a second application, where the second application is displayed on a display interface of the display screen.

It should be noted that the display method provided in the present invention may be applied to electronic devices. Here, the electronic devices may include terminal devices, such as mobile terminals or fixed terminals. Among them, the mobile terminals may include devices such as mobile phones, tablet computers, laptop computers, wearable electronic devices, etc. The fixed terminals may include desktop computers, smart TVs, vehicle-mounted devices, etc. In some embodiments, the display method may also be applied to applications installed on electronic devices.

In some embodiments, the display method of the embodiments of the present invention may be configured in a display apparatus, which may be provided in an electronic device, and the embodiments of the present invention are not limited to this. It should be noted that the execution subject of the embodiments of the present invention may be a central processing unit (CPU) in the electronic device in terms of hardware, or a related background service in the electronic device in terms of software, and there is no limitation to this.

In some embodiments, with continuous development of the electronic devices, some manufacturers may integrate screens and cameras together. However, when the screen and the camera are integrated together, it may result in that the area on the screen for setting the camera is inconvenient for displaying the interface, which is not conducive to improving the utilization rate of the screen.

In the embodiments of the present invention, by setting a first target component on the display screen, a more intuitive operation manner is provided to the user, so that the area where the camera is located can also be used to display interface information, thus improving the utilization rate of the display screen.

Here, the first target component is located at a first preset position on the display screen of the electronic device, and the first preset position includes but is not limited to a left position, a right position, an upper position, or a lower position on the display screen. In some embodiments, when the electronic device includes a front camera, the first preset position includes at least one of a position area where the front camera of the electronic device is located, a position area on the left of the front camera of the electronic device but excluding the position of the front camera, or a position area on the right of the front camera of the electronic device but excluding the position of the front camera.

In the embodiments of the present invention, the display form of the first target component on the display screen includes but is not limited to a polygon, a circle, or a capsule shape after a rounded rectangle is elongated, etc. The first target component may be a component at the software level, or a component obtained by combining the software level and the hardware level.

Taking an electronic device with a front camera as an example, at the hardware level of the electronic device, the first target component may be integrated with the front camera, the ambient light sensor, the distance sensor, and the dot projector for facial recognition of the electronic device, making the structure of the electronic device more compact and optimizing the utilization rate of the hardware space of the electronic device. Since sensors are integrated in the first target component, the access risk due to accidental touches or being unauthorized may be reduced by fixing the position of the first target component. Furthermore, since the first target component involves dynamic interaction, by fixing the first target component above the display screen, it may not only match the user's usage habits (for example, notifications on the electronic device are typically popped up from the top of the display screen) but also reduce the manufacturing costs. Therefore, during hardware design, a physical gap may be provided at the top of the display screen to accommodate at least the front camera, the ambient light sensor, the distance sensor, and the dot projector. This physical gap serves as the physical carrier for the first target component. The fixed position of the physical gap determines the immobility of the interaction area of the first target component, that is, the first target component is always located above the display screen. Among them, the shape of the physical gap may be arbitrarily set as needed. For example, to optimize the utilization rate of the hardware structure, the physical gap may be in a form of "capsule shape" or "circle".

At the software level of the electronic device, the boundary area of the physical gap may be "blurred" into a dynamic interactive interface by using the Android system, and the hardware gap may be converted into a function entrance by using real-time rendering of pixels around the screen, so that the first target component can dynamically adjust the size of the first target component and/or the display content of the first target component according to the running state of different applications and the system state of the electronic device, thus not only improving the utilization rate of the display screen, but also providing a more intuitive operation manner for the user and reducing the user's operating burden.

In the embodiments of the present invention, the first application includes a target application whose application type satisfies a first condition and/or whose running state satisfies a second condition. In response to a first preset operation on the first application, relevant information of the first application may be displayed by using the first target component, so that the relevant information of the first application may be viewed without switching the display interface of the display screen or waiting for new notification information from the first application, thus improving the convenience of using the electronic device.

It should be noted that target application whose application type satisfies the first condition may be understood as an application that is not in a running state but has high user attention, such as a communication application, a payment application, or an application that triggers a message reminder event. Similarly, the target application whose running state satisfies the second condition may be understood as an application that is in a running state, such as an application displayed in the foreground of an electronic device or an application running in the background of an electronic device.

Here, the first preset operation may be triggered by the electronic device. For example, the electronic device triggers a message reminder event of the first application, such as an alarm reminder, a schedule reminder, a phone reminder, or a charging reminder. In another example, the electronic device triggers a message notification event of the first application, such as a text message notification, an email notification, etc. For example, the first application supports the user to purchase a concert ticket. After the user purchases the concert ticket, even if the first application is not in the running state, the electronic device may trigger a schedule reminder event within a certain period to remind the user of the start time of the concert. In the human-car-home scenario, the message notification reminder may also be a reminder of a foreign object detected by the doorbell at home, thus triggering a message notification event and displaying the notification information of "Presence of a visitor currently" by using the first target component. In the scenario where a smart car turns on the home mode or away mode, when the car is near home or leaves home, a message notification reminder may be triggered, and the journey message notification may be displayed by using the first target component.

In addition, the first preset operation may alternatively be triggered by the user. For example, the user adjusts the application displayed in the foreground to run in the background. For example, the user switches the display interface of the electronic device from an application interface of a music application to an application interface of a journey application, without closing the music application. For another example, the user adjusts the first application that is not in the running state to be displayed in the foreground, and triggers the preset function of the first application. For example, the user triggers the recording function, screen recording function or screen projection function of the first application.

It is understood that, in order to reduce the space occupied by the first target component on the display screen, in response to the first preset operation, key information of the first application may be displayed by using the first target component. Here, the key information of the first application includes but is not limited to identification information, running information indicated by the running state, prompt information indicated by the message reminder event, notification information indicated by the message notification event, and a function identification indicated by the preset function, etc.

In some embodiments, the first target component may automatically adjust the display priority to preferentially perform the task with a high priority. Specifically, when the first target component displays key information of a music application, if it detects that the electronic device has been switched from the application interface to the lock-screen interface, the first target component may remove the key information of the music application and display key information of facial recognition, causing the first target component to preferentially perform the facial recognition task.

In some embodiments, in order to improve development efficiency and reduce maintenance costs of the first target component, the size of the first target component may be preset. In response to a first preset operation on the first application, the first target component displays key information of the first application according to the preset size.

For example, when the electronic device triggers an incoming call reminder event of the first application, the electronic device switches from displaying the first target component according to a first preset size to displaying the first target component according to a second preset size, and displays the contact information and contact phone number by using the first target component of the second preset size. When the user adjusts the first application from a foreground display state to a background running state, the electronic device maintains display of the first target component according to the first preset size, and displays the identification information of the first application by using the first target component of the second preset size. Here, the second preset size is greater than the first preset size.

In some embodiments, in order to improve the utilization rate of the first target component, the actual size of the first target component is determined according to the key information of the first application. In response to a first preset operation on the first application, the current size of the first target component is adjusted based on the key information of the first application to obtain the actual size of the first target component. The first target component displays the key information of the first application according to the actual size. Here, the actual size is positively correlated with the information amount of the key information.

For example, when a user adjusts a taxi-hailing application from being displayed in the foreground to being run in the background, the current size of the first target component is adjusted based on the identification information of the taxi-hailing application and the driver's license plate number; and the application icon of the taxi-hailing application and the driver's license plate number are displayed by using the adjusted first target component. When a user adjusts a music application from being displayed in the foreground to being run in the background, the current size of the first target component is adjusted based on the album cover and the play logo of the music application; and the album cover and the play logo of the music application are displayed by using the adjusted first target component. Here, the driver's license plate number occupies a greater display area than the play logo. Therefore, the size of the first target component obtained by adjustment based on the key information of the taxi-hailing application is greater than the size of the first target component obtained by adjustment based on the key information of the music application.

Here, the first target component may display key information of an application. For example, when the first preset operation is detected and the first target component displays key information of a second application, the key information of the second application is removed from the first target component, and the key information of the first application is displayed in the first target component. In addition, the first target component may also display key information of more than one application. For example, when the first preset operation is detected and the first target component displays the key information of the second application, the display style of the key information of the second application in the first target component is adjusted, such as the display quantity and/or the display size, and then the key information of the first application is displayed by using the adjusted first target component. Here, the priority of the first application is higher than the priority of the second application.

It is understandable that, in order to improve the efficiency of information sharing, when at least one second preset operation of the user on the first target component is detected, the key information of the first application and the information associated with the key information may be sent to the second application on the display interface. In this way, without jumping from the current display interface or displaying a floating window of the first application, the key information of the first application and the information associated with the key information may be shared in real time and conveniently, thus improving the convenience of the user in using the electronic device and improving the usage experience of the user.

Here, all information associated with the key information may be sent to the second application, or only part of the information associated with the key information may be sent to the second application. For example, all information associated with the key information may include the distance between the pickup point and the drop-off point, the time required to journey from the current position to the drop-off point, the driver's phone number, and the driver's vehicle information. In response to at least one second preset operation, the above all information may be sent to the second application, or only the time required to journey from the current position to the drop-off point and/or the driver's phone number may be sent to the second application.

In the embodiments of the present invention, the second application is any application on the display interface, such as a social application, a short video application, or a search application. Taking a social application as an example, in response to at least one second preset operation, the key information of the first application and the information associated with the key information may be shared to a sharing object (e.g., a social network contact) of the social application or the information exchange platform of the social application.

For example, the display interface includes a dialog box of a second application, the second application is a social application, and a new message pops up in the dialog box. For example, the new message is a notification message of "How long until you arrive?". In response to at least one second preset operation, the journey information of the journey application displayed by the first target component is sent to the dialog box. For another example, the new message is a notification message of "What song are you listening to?". In response to at least one second preset operation, the music link or song title of the music application displayed by the first target component is sent to the dialog box. In this way, information may be shared in real time without performing a screenshot operation or a manual editing operation by the user, thus improving the efficiency of information sharing.

In some embodiments, when the display interface displays more than one application icon, the first distance between the release position of at least one second preset operation and each application icon is determined, the shortest first distance is determined from all the first distances, and the application icon corresponding to the shortest first distance is determined as the application icon of the second application.

Here, at least one second preset operation on the first target component may be triggered by a user gesture or a user voice command.

Take triggering a second preset operation on the first target component as an example, when the second preset operation is the target operation, the key information of the first application and the information associated with the key information are sent to the second application. Here, the target operation may be set as needed, such as a double-click operation, a multi-finger operation, a long press operation, or a slide operation.

In some embodiments, the sensor integrated in the first target component can capture and analyze the light change or the resistance change generated when a finger touches the display screen to determine the number of touches. If the number of touches indicated by the first preset operation within a preset time is greater than or equal to a preset threshold, it is determined that the second preset operation is a multi-finger operation, and the key information of the first application and the information associated with the key information are sent to the second application.

In some embodiments, the sensor integrated in the first target component can sense the contact of the finger twice in succession and generate two touch signals in a short time. When the time interval between the two touch signals indicated by the second preset operation is less than a preset time threshold and the touch distance between the two touch signals is less than a preset distance threshold, it is determined that the touch operation is a double-click operation, and the key information of the first application and the information associated with the key information are sent to the second application.

Taking triggering two second preset operations as an example, in response to the first operation on the first target component, a first card is displayed in a floating manner on the display interface, and the first card includes target key information that matches the preset title of the first card, where the target key information is determined from the key information of the first application and the information associated with the key information. In response to the second operation on the first card, the first card is sent to the second application. In this way, based on the first operation, the user may preview the information to be shared on the display interface, thus improving the convenience of using the electronic device. Here, the first operation and the second operation may be arbitrarily set according to needs. The operation type of the first operation and the operation type of the second operation may be the same; for example, the first operation and the second operation are both pressing operations. The operation type of the first operation and the operation type of the second operation may alternatively be different; for example, the first operation is a single-click operation, and the second operation is a sliding operation or a downward drag operation.

In some embodiments, when the key information of the first application and the information associated with the key information are sent to the dialog box of the second application or the edit box of the second application, the display interface displayed on the display screen is maintained (i.e., no interface jump occurs), and a notification that the application information has been shared is displayed on the display interface. Here, displaying the notification that the application information has been shared may be displaying a text prompt notification on the display interface, for example, outputting a prompt box on the display interface; it may alternatively be adjusting the display effect of the first key information in the first target component, for example, adjusting the display color of the first key information to green.

Here, for applications that do not support the image display or the small window form within the edit box, the key information and the information associated with the key information may be converted into a format matching the edit box to obtain the first information to be shared, and the first information to be shared may be displayed in the edit box, thus improving the accuracy of information sharing. The display format supported by the edit box may be the text format and/or the uniform resource locator (URL) format.

In order to facilitate the sharing object indicated in the dialog box to view more shared information and edit the shared information, the key information and the information associated with the key information may be converted into a format matching the dialog box to obtain the second information to be shared, and the second information to be shared may be displayed in the dialog box, thus improving the accuracy of information sharing. Here, the display format supported by the dialog box may be an applet format and/or a URL format.

For example, the display interface is an application interface of a second application (e.g., a chat interface of a social application), and the first target component displays key information of a music application. In response to the release position of the at least one second preset operation being at the edit box of the chat interface, the key information of the music application and the information associated with the key information are converted into a text format and a URL format to obtain the first information to be shared (e.g., the title of the song being currently played, the singer's name, and the URL link of the song being currently played), and the first information to be shared is displayed in the edit box. The user can edit the information displayed in the edit box (e.g., entering the text of "This song is very nice" in the edit box) to obtain the information to be shared. Based on the user's operation, the information to be shared is sent from the edit box to a sharing object indicated by the chat interface. In response to the release position of the at least one second preset operation is at the identification of the sharing object indicated by the chat interface (e.g., the sharing object's chat avatar), the key information of the music application and the information associated with the key information are converted into an applet format to obtain the second information to be shared, and the second information to be shared is displayed in a dialog box. The sharing object can quickly access the music application by using the second information to be shared, thus improving the convenience and efficiency of information sharing.

In some embodiments, when the display interface is not the contact interface of the second application and at least one second preset operation is detected, the electronic device selects the target contact with the highest priority from the contact interface and sends the key information and the information associated with the key information to the dialog box of the target contact or the edit box on the chat interface of the target contact. Here, the target contact is the contact pinned to the top of the contact interface and/or the contact with whom the communication time is closest to the current time.

Compared to the manner of directly displaying a floating window of the first application on the display interface and sharing the floating window to the second application, in the embodiments of the present invention, by using the manner of displaying the key information of the first application in the first target component and then sharing it after the user triggers at least one second preset operation, the space occupied by the display screen may be saved, and the interference to the user in viewing the content of the display interface may be reduced.

For example, FIG. 2A is a schematic diagram of an interface display according to some embodiments of the present invention. As shown in FIG. 2A, when there is no target application whose application type satisfies the first condition and/or whose running state satisfies the second condition on an electronic device (such as a mobile phone), the first target component 21 on the display screen of the electronic device is set to a hidden state, where the first target component 21 at least covers the area where the front camera 22 of the electronic device is located and at least part of the first application interface 20. In response to switching from the first application interface 20 of the first application to the second application interface 23 of the second application, the first target component 21 is switched from the hidden state to the display state, and the key information of the first application is displayed.

For another example, FIG. 2B is a schematic diagram of an interface display according to some embodiments of the present invention. As shown in FIG. 2B, the display interface 201 is a chat interface of the second application. In response to a first preset operation on the first application, the key information of the first application (i.e., 203 shown in the figure) is displayed by using the first target component 202. The first application includes a target application whose application type satisfies the first condition and/or whose running state satisfies the second condition, and the first target component is located at a first preset position on the display screen of the electronic device. In response to at least one second preset operation 203 on the first target component 202, the key information of the first application and the information associated with the key information (i.e., 205 shown in the figure) are sent to the dialog box of the second application.

In the embodiments of the present invention, in response to a first preset operation on the first application, the key information of the first application is displayed by using the first target component, where the first application includes a target application whose application type satisfies a first condition and/or whose running state satisfies a second condition, and the first target component is located at a first preset position of a display screen of the electronic device. In response to at least one second preset operation on the first target component, the key information of the first application and the information associated with the key information are sent to the second application, and the second application is displayed on the display interface of the display screen.

On the one hand, by displaying the key information of the application using the first target component, a more intuitive operation manner can be provided to the user while improving the utilization rate of the display screen, thus reducing the user's operating burden; on the other hand, the space occupied by a floating window displayed in a fixed manner on the display screen is saved, and the user does not need to switch the current display interface to share the key information of the application and the information associated with the key information in real time and conveniently, thus improving the flexibility of the sharing function of the electronic device and improving the efficiency of information sharing.

In some embodiments, in response to at least one second preset operation on the first target component, sending the key information of the first application and the information associated with the key information to the second application includes:
in response to a first operation on the first target component, displaying a first card in a floating manner on the display interface, where the first card includes target key information matching a preset title of the first card, and the target key information is determined from the key information of the first application and the information associated with the key information; and
in response to a second operation on the first card, sending the first card to the second application.

Here, the at least one second preset operation includes the first operation and the second operation. The first operation and the second operation may be arbitrarily set as needed. The operation type of the first operation and the operation type of the second operation may be the same or different. For example, the first operation is a press operation, and the second operation is a press operation, a slide operation, or a click operation, etc.

It is understandable that, in the scenario of information sharing, in response to the first operation, the first card may be displayed in a floating manner on the display interface, so that the user can preview the content of the first card, so as to provide real-time feedback to the user, thus reducing the situation where the user repeats the operation because the user is unsure whether to trigger the sharing operation, and improving the user's sharing experience.

In the embodiments of the present invention, in order to reduce the space occupied by invalid information on the display screen, a preset title may be set in the first card, so that when the first operation is detected, the first card includes target key information matching the preset title of the first card, rather than all key information and all information associated with the key information.

In the embodiments of the present invention, the number and form of the preset title may be arbitrarily set according to needs. For example, the preset title includes a text title and an image title, and the text title includes a main title and a subtitle. The key information and the information matching the image title, the main title, and the subtitle in the information associated with the key information are determined as the target key information. In addition, the arrangement of the image title, the main title, and the subtitle in the first card is not limited. For example, the first card is divided into a first area and a second area. The first area is used to display information matching the image title, and the second area is used to display information matching the main title and information matching the subtitle.

Here, the information matching the image title may be the application icon or the running information of the application, the information matching the main title may be the application type, and the information matching the subtitle may be information that users pay more attention to other than the application type and the running information of the application.

For example, when the identification information of the journey application is displayed by using the first target component and the first operation is detected, the icon of the journey application is displayed at the image title of the first card, the journey sharing is displayed at the main title, and the driver's license plate number or destination information is displayed at the subtitle.

For example, when the identification information of the music application is displayed by using the first target component and the first operation is detected, the album cover of the music being played is displayed at the image title of the first card, music sharing is displayed at the main title, and the singer's name or the music name of the music being played is displayed at the subtitle.

In some embodiments, in order to improve development efficiency and reduce maintenance costs of the first card, the size of the first card may be preset. In response to the first operation, target key information is displayed by the first card according to the preset size.

In some embodiments, in order to improve the display effect of the first card, the actual size of the first card is determined according to the target key information matching the preset title of the first card. In response to the first operation, the current size of the first card is adjusted based on the target key information to obtain the actual size of the first card, and the target key information is displayed by the first card according to the actual size. Here, the actual size is positively correlated with the information amount in the target key information.

Here, when the first card is displayed in a floating manner on the display interface, the display state of the first card may be adjusted according to the user's touch operation, so as to satisfy the user's personalized needs. For example, when the upper edge of the first card contacts the upper edge of the display screen, or the distance that the first card moves upward is greater than a preset length threshold, or the speed at which the first card moves upward is greater than a preset speed threshold, the electronic device outputs prompt information and removes the first card from the display interface, where the prompt information is used to inform the user that the first card is about to be closed.

In the embodiments of the present invention, taking into account the possibility of the user's erroneous sharing operation, when the second operation on the first card is detected, the second card is sent to the second application. In this way, when the user determines that the target key information displayed on the first card is not the information that needs to be shared currently, the user may stop sharing in time by not triggering the second operation, thus improving the flexibility of information sharing.

Here, the first card may be sent to an edit box of the second application or a dialog box of the second application.

In some embodiments, the edit box of the second application is a functional area for the user to enter and edit text. For different application interfaces of the second application, there are differences in the editing boxes of the second application. For example, when the display interface is the information exchange platform interface of the second application, the edit box of the second application may be a comment area or an editing area for posting the information to be shared.

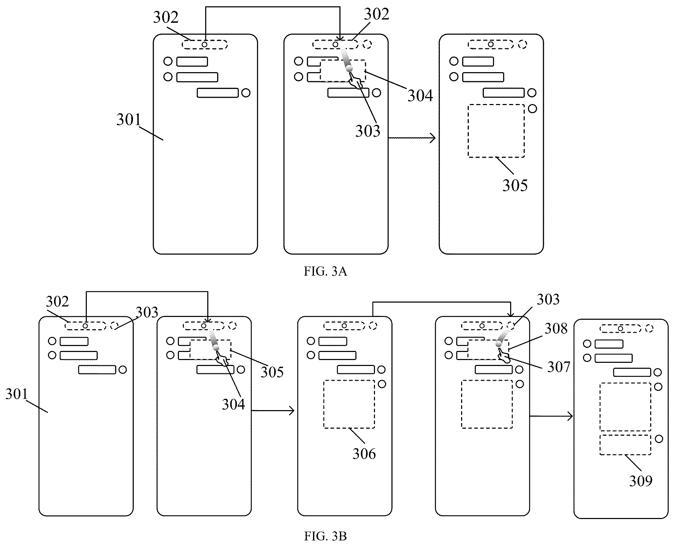

For example, FIG. 3A is a schematic diagram of an interface display according to some embodiments of the present invention. As shown in FIG. 3A, the display interface 301 is a chat interface of the second application. In response to the first preset operation on the first application, the key information of the first application is displayed by using the first target component 302. In response to the first operation 303 on the first target component 302, the first card 304 is displayed in a floating manner on the display interface 301, and the first card 304 includes target key information matching the preset title of the first card, where the target key information is determined from the key information of the first application and the information associated with the key information. In response to the second operation on the first card 304, the key information of the first application and the information associated with the key information may be converted into a format matching the dialog box of the second application to obtain the second information to be shared 305, and the second information to be shared 305 is displayed in the dialog box.

In the embodiments of the present invention, in the scenario of sharing application information, based on a first operation, a user can preview a first card on a display interface, thus reducing repeated operations on a first target component and improving the efficiency of information sharing. By setting the logic that the first card will be sent to a second application only after a second operation is triggered, the situation of erroneous sharing is reduced, thus improving the flexibility of information sharing.

In some embodiments, the method further includes:
in response to a third operation on the first target component, displaying a second card in a floating manner on the display interface, where the second card includes the key information of the first application and the information associated with the key information;
where a size of the second card is greater than a size of the first card.

Here, the operation type of the third operation is different from the operation type of the first operation, and the third operation includes but is not limited to a click operation, a slide operation, or a long press operation, etc.

In the embodiments of the present invention, the second card is used to display the key information of the first application and the information associated with the key information, and the first card is used to display the target key information determined from the key information and the information associated with the key information. Therefore, the size of the second card is greater than that of the first card.

Here, the size of the second card may be preset. For example, in response to a third operation on the first target component, the second card of the preset size is displayed in a floating manner on the display interface. In addition, the size of the second card may also be determined based on the key information of the first application and the information associated with the key information. In another example, based on the key information of the first application and the information associated with the key information, the initial size of the second card is adjusted, and the second card is displayed in a floating manner on the display interface according to the adjusted size.

For example, there are differences in the information amount displayed on the second card for different first applications. For example, the application information displayed on the second card of a taxi-hailing application may include the distance between the driver and the boarding point, and the time required for the driver to reach the boarding point. The application information displayed on the second card of a high-speed rail ticket purchasing application may include the starting and ending stations, departure and arrival times, and ticket gate information. Therefore, in order to reduce the space occupied on the display screen while accurately viewing the key information of the first application by using the second card, the initial size of the second card may be adjusted based on the key information of the first application and the information associated with the key information.

In some embodiments, when the first operation is triggered before the third operation, the second card is highlighted on the display interface compared to the first card. When the first operation is triggered after the third operation, the first card is highlighted on the display interface compared to the second card. Here, highlighting includes highlighting the position and/or the display effect.

Here, when the second card is displayed in a floating manner on the display interface, the display state of the second card may be adjusted according to the user's touch operation to satisfy the user's personalized needs. For example, when the upper edge of the second card touches the upper edge of the display screen, or the distance that the second card moves upward is greater than a preset length threshold, or the speed at which the second card moves upward is greater than a preset speed threshold, the electronic device outputs a prompt message and removes the second card from the display interface, where the prompt message is used to prompt the user that the second card is about to be closed. In another example, in response to a sixth operation on the second card, the application interface of the first application is displayed in full screen, where the operation type of the sixth operation is different from the operation type of the fourth operation.

In some embodiments, the first target component is located in the position area where the front camera of the electronic device is located. When a third operation is detected, a second card is displayed on the display interface, and the second card does not cover the position area where the front camera is located, so that the user can view the key information of the first application and the information associated with the key information, and pay attention to key information of other applications displayed by the first target component, thus improving the intelligence and flexibility of the first target component, and further improving the convenience of operations on the electronic device.

For example, when the user views the information displayed on the second card, the electronic device may display a schedule reminder (for example, reminding the user of the opening time of a performance) by using the first target component. In this way, when responding to the third operation, it will not hinder other first applications from being displayed on the first target component, thus improving the usage experience of the user.

In the embodiments of the present invention, when a third operation is detected, a second card may be displayed in a floating manner on the display interface, so that the user can view the key information of the first application and the information associated with the key information at any time without switching the display interface, thus reducing the user's operational burden. At the same time, the user can adjust the display state of the second card as needed, to satisfy the personalized needs of the user and enhance the usage experience of the user.

In some embodiments, the method further includes:
in response to a fourth operation on the second card, displaying the first application in a small window form on the display interface; and
in response to a fifth operation on the first application in the small window form, sending the first application in the small window form to the second application.

It may be understood that, in different usage scenarios, the user may have different requirements for the detail level of the information associated with key information displayed on the display interface. For example, taking the first application being a music application as example, when the user needs to adjust the playback progress of the music, a control for adjusting the playback progress may be displayed on the display interface. When the user needs to search for a singer and a target song in the search box, more complete application information may be displayed on the display interface to facilitate the user's operation.

Therefore, in the embodiments of the present invention, in response to the third operation, a second card is displayed in a floating manner on the display interface, so that the user can view the key information of the first application and the information associated with the key information based on the second card, and/or perform simple editing operations.

When a fourth operation on the second card is detected, the first application is displayed in a small window form on the display interface, so that the user can view more application information based on the first application in the small window form, and/or perform complex editing operations. Compared to directly displaying the first application in the small window form, by using the manner of displaying in response to the fourth operation, it can reduce the situation where a large amount of application information is not effectively displayed and reduce the occupancy of the display screen.

In the embodiments of the present invention, the third operation and the fourth operation may be set arbitrarily according to needs. The operation type of the third operation and the operation type of the fourth operation may be the same or different. For example, the third operation is a click operation, and the fourth operation is a click operation, a slide operation, or a downward drag operation, etc.

Here, more information is displayed by the first application displayed in a small window form than the second card, and the user can perform more complex operations. For example, the user can view a music playlist based on the second card to and select a target song from the playlist to play. The user can trigger all preset functions included by the first application based on the first application displayed in a small window form, such as searching for the target music in the search box, leaving comments, creating a custom playlist, viewing the top playlists, and listening to the radio.

In some embodiments, the display state of the first application in the small window form may be adjusted according to the user's touch operation, to satisfy the user's personalized needs. For example, the first application in the small window form includes a title bar control, which is used to control the display size, display position and/or display content of the small window. The touch operation is any one of a single click operation, multiple consecutive single click operations, or a long press operation on the title bar control, and the title bar control is located in the top area or the bottom area of the small window.

In some embodiments, when the first application is displayed in the small window form on the display interface, if a touch operation on the display interface is detected, the small window is maintained to be displayed in a floating manner on the display interface; if a touch operation on the small window is detected, the display content of the small window may be adjusted in response to the touch operation, but the application interface of the first application may not be displayed in full screen. In this way, the user can handle more than one task on the display interface, which is conducive to improving the user's work efficiency.

Here, when a fifth operation on the first application in the small window form is detected, the first application in the small window form is sent to the second application, thus satisfying the user's need to share information when viewing information based on the second card, and improving the flexibility of the electronic device.

In the embodiments of the present invention, when the fifth operation is detected, the first application may be displayed in the small window form on the display interface, so that the user can handle more than one task on the display interface, thus improving the user's work efficiency and the utilization rate of the display screen. At the same time, the application information may be shared without the user having to perform manual editing or screenshot operations, thus improving the efficiency of information sharing.

In some embodiments, the method further includes:
in response to the first card being displayed in a floating manner on the display interface, maintaining display of the key information of the first application in the first target component; or
in response to the second card being displayed in a floating manner on the display interface, removing the key information of the first application from the first target component.

It may be understood that, when the first card is displayed in a floating manner on the display interface, the key information of the first application may be removed from the first target component, which can reduce the situation where invalid information is displayed in the first target component, thus improving the utilization rate of the first target component.

In some embodiments, in response to the key information of the first application being removed from the first target component, if a first preset operation on other applications is not detected, the first target component may be controlled to be adjusted from a display state to a hidden state, thus saving the space occupied by the first target component on the display screen; if a first preset operation on other applications is detected, the size of the first target component may be adjusted based on the key information of the other applications, and the key information of the other applications may be displayed by using the adjusted first target component.

For example, the first preset position is the position area where the front camera of the electronic device is located. When the first target component is in the display state, a capsule-shaped area of the first preset size is displayed on the display screen, and the key information of the first application is displayed in the capsule-shaped area of the first preset size except for the area of the front camera and the sensor. When the first target component is in the hidden state, the capsule-shaped area of the first preset size is adjusted to a capsule-shaped area of the second preset size. Here, the first edge of the capsule-shaped area of the second preset size contacts the front camera, and the first edge of the capsule-shaped area of the second preset size contacts the sensor.

It should be noted that when the second card is displayed in a floating manner on the display interface, the key information of the first application may be maintained to be displayed in the first target component, so that the user can view the key information of the first application and the information associated with the key information in the subsequent process, thus improving the usage experience of the user.

In the embodiments of the present invention, by using the card displayed in a floating manner on the display interface, the display state of the key information of the first application and the information associated with the key information in the first target component is determined, thus improving the flexibility of the first target component and enhancing the usage experience of the user.

In some embodiments, in response to the first preset operation on the first application, displaying the key information of the first application by using the first target component includes:
in response to the first preset operation, and key information of a third application being displayed in the first target component, moving the key information of the third application from the first target component to a second target component for display, and displaying the key information of the first application in the first target component;
where a priority of the first application is higher than a priority of the third application, and the second target component is located at a second preset position on the display screen of the electronic device, and the second preset position is different from the first preset position.

Here, the display form of the second target component and the display form of the first target component on the display screen may be the same; for example, the first target component and the second target component are both capsule-shaped. The display form of the second target component and the display form of the first target component on the display screen may alternatively be different; for example, the first target component is capsule-shaped and the second target component is circular.

It is understandable that, in order to reduce the space occupied by the target component on the display screen, the first target component may be set to be highlighted on the display screen compared to the second target component, so that the display position of the key information of the application may be determined based on the priority of the application, thus improving the utilization rate of the target component.

In the embodiments of the present invention, the highlighting may be a visual highlighting, and the first target component being highlighted on the display screen compared to the second target component includes at least one of the following: the first target component has a highlighting display effect (for example, color) compared to the second target component, the first target component has a highlighting display size compared to the second target component, or the first preset position of the first target component on the display screen is better than the second preset position of the second target component on the display screen.

Here, different display manners may be used for display respectively, or combinations of different display manners may be used for display, so that the first target component is visually highlighted, which is not specifically limited here.

For example, when the electronic device includes a front camera, the first preset position may be a position area where the front camera is located; and the second preset position may be a position area on the left of the front camera but excluding the position of the front camera, or a position area on the right of the front camera but excluding the position of the front camera. When the electronic device does not include a front camera, the first preset position may be a top position on the display screen, and the second preset position may be a left position, a right position, or a bottom position on the display screen.

It may be understood that, when the first preset operation is detected and the key information of the third application is displayed in the first target component, the priority of the third application and the priority of the first application are determined. When the priority of the first application is higher than the priority of the third application, the key information of the third application is moved from the first target component to the second target component for display, and the key information of the first application is displayed in the first target component, thus highlighting the key information of the first application and improving the usage experience of the user.

In some embodiments, when the priority of the first application is lower than the priority of the third application, the key information of the third application is maintained to be displayed in the first target component, and the key information of the first application is displayed in the second target component, to highlight the key information of the third application.

Here, the priority of an application may be related to the application type. For example, a navigation application has a higher real-time performance than a music application, thus the priority of the navigation application is higher than the priority of the music application. The priority of an application may also be related to the key information of the application. For example, the key information of a journey application includes journey information, while the key information of a music application includes the album cover of songs. Users pay more attention to the journey information than the album cover, thus the priority of a journey application is higher than the priority of a music application.

In some embodiments, when the key information of the first application is removed from the first target component, and it is determined that there is no key information currently displayed in the first target component, the key information of the third application is moved from the second target component to the first target component for display, thus improving the flexibility of the second target component.

In some embodiments, in response to a third preset operation on a fifth application and key information of the third application being displayed in the first target component, the key information of the fifth application is displayed in the second target component, where the priority of the fifth application is lower than the priority of the third application.

In some embodiments, when the priority of the fifth application is higher than the priority of the third application, the key information of the third application is moved from the first target component to the second target component for display, and the key information of the fifth application is displayed in the first target component.

In some embodiments, when the first card is displayed in a floating manner on the display interface, the user can trigger a seventh operation on the target component on the display screen as needed, a third card of the fifth application is displayed in a floating manner on the display interface, and the third card is highlighted compared to the first card; or, in response to the seventh operation, the first key information matching the preset title is displayed in the first card, where the first key information is determined from the key information of the fifth application and the information associated with the key information, thus providing a real-time feedback to the user, reducing the situation where the user repeats the operation due to that it is uncertain whether to trigger the sharing operation, and thus improving the user's sharing experience. Here, the operation type of the seventh operation is the same as the operation type of the first operation. Moreover, the seventh operation may act on the first target component or the second target component, which is not limited here.

For example, FIG. 3B is a schematic diagram of an interface display according to some embodiments of the present invention. As shown in FIG. 3B, the display interface 301 is a chat interface of a second application. In response to the first preset operation and key information of a third application being displayed in the first target component 302, the key information of the third application is moved from the first target component 302 to the second target component 303 for display, and the key information of the first application is displayed in the first target component 302, where the priority of the first application is higher than the priority of the third application, the first target component 302 is located at the first preset position on the display screen of the electronic device, and the second target component 303 is located at the second preset position on the display screen of the electronic device.

In response to the first operation 304 on the first target component 302, the first card 305 is displayed in a floating manner on the display interface 301, and the first card 305 includes target key information matching the preset title of the first card, where the target key information is determined from the key information of the first application and the information associated with the key information. In response to the second operation on the first card 305, the key information of the first application and the information associated with the key information may be converted into a format matching the dialog box of the second application to obtain the second information to be shared 306, and the second information to be shared 306 is displayed in the dialog box.

In response to an eighth operation 307 on the second target component 303, a third card 308 is displayed in a floating manner on the display interface 301, and the third card 308 includes target key information matching the preset title, where the target key information is determined from the key information of the third application and the information associated with the key information. In response to a ninth operation on the third card 308, the key information of the third application and the information associated with the key information may be converted into a format matching the dialog box of the second application to obtain the second information to be shared 309, and the second information to be shared 309 is displayed in the dialog box.

In the embodiments of the present invention, when there are more than one application displayed on a target component, the target component for displaying key information of the application is determined based on the priority of each application, thus improving the intelligence of the target component and further improving the convenience of operating the electronic device.

In some embodiments, sending the key information of the first application and the information associated with the key information to the second application includes at least one of the following:
obtaining first information to be shared by converting the key information of the first application and the information associated with the key information into a format matching an edit box of the second application, and displaying the first information to be shared in the edit box; or
obtaining second information to be shared by converting the key information of the first application and the information associated with the key information into a format matching a dialog box of the second application, and displaying the second information to be shared in the dialog box.

It is understood that, the edit box does not support displaying images or applications in a small window form. The key information and the information associated with the key information may be converted into a format matching the edit box to obtain the first information to be shared, and the first information to be shared may be displayed in the edit box, thus improving the accuracy of information sharing. Here, the format matching the edit box may be a text format and/or a URL format, etc.

In order to facilitate the sharing object indicated by the dialog box to view more shared information and edit the shared information, the key information and the information associated with the key information may be converted into a format matching the dialog box to obtain the second information to be shared, and the second information to be shared may be displayed in the dialog box, thus improving the accuracy of information sharing. Here, the format matching the dialog box may be a window format, a URL format, and/or a text format, etc.

For example, in response to at least one second preset operation, the key information of the first application and the information associated with the key information are converted into a URL link or a text format to obtain the first information to be shared. In response to at least one second preset operation, the key information of the first application and the information associated with the key information are converted and displayed in a window format to obtain the second information to be shared.

For example, the display interface is an application interface of a second application (e.g., a chat interface of a social application), and the first target component displays key information of a music application. In response to the release position of the at least one second preset operation being at the edit box of the chat interface, the key information of the music application and the information associated with the key information are converted into a text format and a URL format to obtain first information to be shared (e.g., the title of the song being currently played, the singer's name, and the URL link of the song being currently played), and the first information to be shared is displayed in the edit box. The user can edit the information displayed in the edit box (e.g., entering the text of "This song is very nice" in the edit box) to obtain the information to be shared. Based on the user's operation, the information to be shared is sent from the edit box to a sharing object indicated by the chat interface. In response to the release position of the at least one second preset operation is at the identification of the sharing object indicated by the chat interface (e.g., the sharing object's chat avatar), the key information of the music application and the information associated with the key information are converted into an applet format to obtain the second information to be shared, and the second information to be shared is displayed in a dialog box. The sharing object can quickly access the music application by using the second information to be shared, thus improving the convenience and efficiency of information sharing.

In the embodiments of the present invention, in response to at least one second preset operation, the key information of the first application and the information associated with the key information are converted into a format matching the edit box, or a format matching the dialog box, so as to reduce the situation where information sharing fails due to mismatch of the display format, thus improving the accuracy of information sharing.

In some embodiments, in response to the first preset operation on the first application, displaying the key information of the first application by using the first target component includes at least one of the following:
in response to switching from the application interface of the first application to an application interface of a fourth application and the first application being in a running state, displaying identification information of the first application and/or running information indicated by the running state by using the first target component;
in response to triggering a message reminder event of the first application, displaying identification information of the first application and/or prompt information indicated by the message reminder event by using the first target component; or
in response to triggering a preset function of the first application, displaying identification information of the first application and/or a function identification indicated by the preset function by using the first target component.

In the embodiments of the present invention, when it is detected that the application interface of the first application is switched to the application interface of the fourth application, and the first application is in a running state, it is determined that the first application is an application with high user attention, and the identification information and/or running information of the first application may be displayed in the first target component. When a message notification event of the first application or a preset function of the first application is triggered, it is determined that the state of the first application has changed, and the identification information, the running information or the function identification of the first application may be displayed in the first target component, thus providing a more intuitive operation manner to the user and improving the efficiency of the user in viewing and processing the application information of the first application.

In some embodiments, taking the electronic device being a mobile phone as an example, in addition to incoming call messages, text messages, or charging messages, the prompt information may also include notification information from smart homes. For example, in response to an abnormal state of a refrigerator or air conditioner in communication connection with the mobile phone, a prompt message of "The refrigerator or air conditioner has an abnormal state" is displayed by using the first target component. In response to a third operation on the first target component, a second card is displayed in a floating manner on the display interface of the display screen. The second card includes controls for stopping the operation of the refrigerator or air conditioner and controls for restarting the refrigerator or air conditioner. For another example, in response to a ringing event of a doorbell in communication connection with the mobile phone, a prompt message of "A visitor rang the doorbell" is displayed by using the first target component. In response to a third operation on the first target component, a second card is displayed in a floating manner on the display interface of the display screen. The second card includes controls for opening the doorbell and controls for communicating with the visitor. In this way, the prompt information indicated by a message reminder event is displayed by using the first target control, and the user can handle abnormal events and/or linkage events of the smart home, thus improving the convenience and efficiency of human-computer interaction in smart home scenarios.

Taking the electronic device being a vehicle as an example, the first target component is located at a first preset position on the display screen of the vehicle. In response to the distance between the vehicle and the destination satisfying a preset condition, a prompt message of "The vehicle is about to arrive at the destination" is displayed by using the first target component. In response to a third operation on the first target component, a second card is displayed in a floating manner on the display screen. The second card includes the time when the vehicle will arrive at the destination, the distance between the vehicle and the destination, and the current speed of the vehicle. In this way, the prompt message indicated by the message reminder event is displayed by using the first target control to remind the user of relevant journey information, thus the user's convenience in using the vehicle is improved, and the user's driving experience is enhanced.

Taking the electronic device being a mobile phone as an example, when the display content of the mobile phone (screen projection end) is projected to a first device (display end) for display, a screen projection identification is displayed by using the first target component. In response to a third operation on the first target component, a second card is displayed in a floating manner on the display interface of the display screen. The second card includes controls for adjusting the playback progress of the display end and controls for ending the screen projection. In this way, the function identification indicated by the preset function is displayed by using the first target control, and the screen projection process may be conveniently processed without the user having to an interface switching operation, thus improving the convenience and efficiency of human-computer interaction in screen projection scenarios.

Taking the electronic device being a tablet computer as an example, in response to triggering the recording function of the tablet computer, a recording identification is displayed by using the first target component. In response to a third operation on the first target component, a second card is displayed in a floating manner on the display screen. The second card includes controls for pausing recording, controls for ending recording, and the duration of the current recording. In this way, the function identification indicated by a preset function is displayed by using the first target control, and the user can conveniently process the recording process without having to perform an interface switching operation, thus improving the convenience and efficiency of human-computer interaction in recording scenarios.

In the embodiments of the present invention, the running information indicated by the running state, the prompt information indicated by the message reminder event, and the function identification indicated by the preset function are displayed by using the first target component, which can improve the convenience and efficiency of human-computer interaction in smart home scenarios, driving scenarios, screen projection scenarios or recording scenarios.

In some embodiments, in response to the first preset operation on the first application, displaying the key information of the first application by using the first target component includes:
in response to the first preset operation, obtaining the key information of the first application, where the key information of the first application includes identification information of the first application and data information of the first application;
displaying the identification information of the first application in the first target component of a first size by using a first animation; and
simultaneously displaying the identification information of the first application and the data information of the first application in the first target component of a second size by using a second animation;
where the first size is less than the second size.

In the embodiments of the present invention, the animation effect of the first animation and the animation effect of the second animation may be the same or different. For example, the first animation and the second animation may be one or more of a fade-in and fade-out animation displayed in pop-up window, a state animation of a shape deformation, a path animation of a circular trajectory, a flip animation, or a custom animation.

Here, the first size is less than the second size. The display form of the first target component of the first size and the display form of the first target component of the second size may be the same; for example, both of them are capsule-shaped. The display form of the first target component of the first size and the display form of the first target component of the second size may alternatively be different; for example, the first target component of the first size is circular, and the first target component of the second size is capsule-shaped.

It may be understood that, when the identification information of the first application and the data information of the first application are displayed simultaneously according to the second size, the identification information of the first application and the data information of the first application may be displayed adjacent to each other or separately. At the same time, the data information may be determined according to the type of the first preset operation, and the data information includes one of running information, prompt information, or function identification.

In some embodiments, when the identification information and the data information are obtained, the identification information is displayed in the first target component in the display form of a circle by using a first animation. In response to a preset operation on the first target component in the display form of a circle, the identification information and the data information are simultaneously displayed in the first target component in the display form of a capsule shape by using a second animation. Here, the operation type of the preset operation and the operation type of the first operation are different, which include but not limited to a click operation, a long press operation, or a slide operation.

In some embodiments, when the identification information and the data information are obtained, the identification information is displayed in the first target component in the display form of a circle by using a first animation. When the duration of displaying the identification information in the first target component in the display form of a circle reaches a preset duration, the identification information and the data information are simultaneously displayed in the first target component in the display form of a capsule shape by using a second animation. Here, the preset duration may be arbitrarily set as needed, for example, 2 seconds.

In some embodiments, the display color of the data information of the first application matches the display color of the identification information of the first application. For example, the identification information of the first application is a song album cover, and the data information of the first application is a play identification. When the display color of the song album cover in the first target component is blue, the display color of the play identification in the first target component is blue too.

In the embodiments of the present invention, when the key information of the first application is obtained, the key information of the first application is displayed in first target component of different sizes by using animation, so that the manner that the first target component displays information is more vivid, thus giving the user a better visual experience and improving the aesthetics of the display interface.

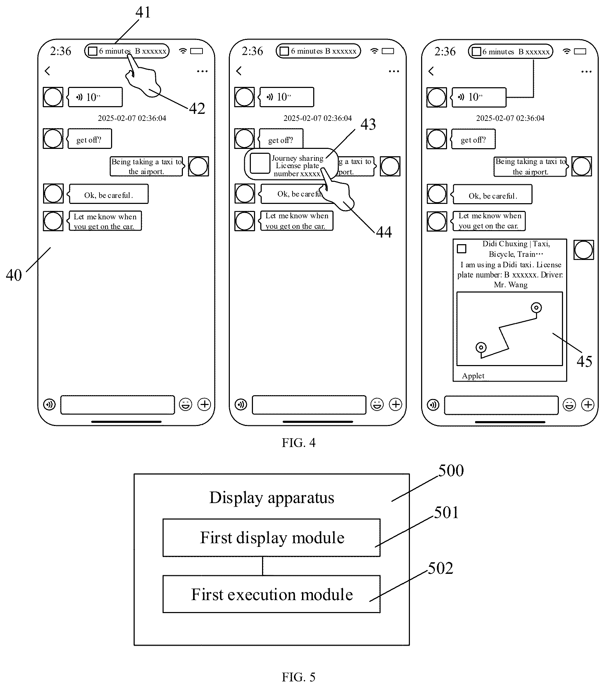

For example, FIG. 4 is a schematic diagram of an interface display according to some embodiments of the present invention. As shown in FIG. 4, the display interface 40 includes a chat interface of a social application. In response to a first preset operation on the first application, the key information of the first application (i.e., the distance from the driver to the boarding point and the driver's vehicle information) is displayed by using the first target component 41. A message of "Let me know when you get on the vehicle" from a contact is received on the chat interface. In response to a first operation 42 on the first target component 41, a first card 43 is displayed in a floating manner on the display interface 40, and the first card 43 includes target key information matching the preset title of the first card (i.e., the application icon of the journey application, journey sharing, and the license plate number). In response to a second operation on the first card 43, the key information of the first application and the information associated with the key information may be converted into a format matching a dialog box of a second application to obtain second information to be shared 45, and the second information to be shared 45 is displayed in the dialog box.

On the one hand, by displaying the key information of the application using the first target component, a more intuitive operation manner can be provided to the user while improving the utilization rate of the display screen, thus reducing the user's operating burden; on the other hand, the space occupied by a floating window displayed in a fixed manner on the display screen is saved, and the user does not need to switch the current display interface to share the key information of the application and the information associated with the key information in real time and conveniently, thus improving the flexibility of the sharing function of the electronic device and improving the efficiency of information sharing.

FIG. 5 is a block diagram of a display apparatus according to some embodiments of the present invention. As shown in FIGS, a display apparatus 500 includes a first display module 501and a first execution module 502.

The first display module 501 is configured to display key information of a first application by using a first target component in response to a first preset operation on the first application, where the first application includes a target application whose application type satisfies a first condition and/or whose running state satisfies a second condition, and the target component is located at a first preset position on a display screen of an electronic device;

The first execution module 502 is configured to send the key information of the first application and the information associated with the key information to a second application in response to at least one second preset operation on the first target component, where the second application is displayed on a display interface of the display screen.

In some embodiments, the first execution module 502 is specifically configured to:
in response to a first operation on the first target component, display a first card in a floating manner on the display interface, where the first card includes target key information matching a preset title of the first card, and the target key information is determined from the key information of the first application and the information associated with the key information; and
in response to a second operation on the first card, send the first card to the second application.

In some embodiments, the apparatus 500 further includes:
a second display module, configured to display a second card in a floating manner on the display interface in response to a third operation on the first target component, where the second card includes the key information of the first application and the information associated with the key information;
where a size of the second card is greater than a size of the first card.

In some embodiments, the apparatus 500 further includes:
a third display module, configured to display the first application in a small window form on the display interface in response to a fourth operation on the second card; and
a second execution module, configured to send the first application in the small window form to the second application in response to a fifth operation on the first application in the small window form.

In some embodiments, the apparatus 500 further includes:
a fourth display module, configured to maintain display of the key information of the first application in the first target component in response to the first card being displayed in a floating manner on the display interface; or
a removal module, configured to remove the key information of the first application from the first target component in response to the second card being displayed in a floating manner on the display interface.

In some embodiments, the first display module 501 is specifically configured to:
in response to the first preset operation, and key information of a third application being displayed in the first target component, move the key information of the third application from the first target component to a second target component for display, and display the key information of the first application in the first target component;
where a priority of the first application is higher than a priority of the third application, the second target component is located at a second preset position on the display screen of the electronic device, and the second preset position is different from the first preset position.

In some embodiments, the first execution module 502 is further configured to perform at least one of the following:
obtaining first information to be shared by converting the key information of the first application and the information associated with the key information into a format matching an edit box of the second application, and displaying the first information to be shared in the edit box; or
obtaining second information to be shared by converting the key information of the first application and the information associated with the key information into a format matching a dialog box of the second application, and displaying the second information to be shared in the dialog box.

In some embodiments, the first display module 501 is further configured to perform at least one of the following:
in response to switching from an application interface of the first application to an application interface of a fourth application, and the first application being in a running state, displaying an identification of the first application and/or running information indicated by the running state by using the first target component;
in response to triggering a message reminder event of the first application, displaying an identification of the first application and/or prompt information indicated by the message reminder event by using the first target component; or
in response to triggering a preset function of the first application, displaying an identification of the first application and/or a function identification indicated by the preset function by using the first target component.

In some embodiments, the first display module 501 is further configured to:
in response to the first preset operation, obtain the key information of the first application, where the key information of the first application includes identification information of the first application and data information of the first application;
display the identification information of the first application in the first target component of a first size by using a first animation; and
simultaneously display the identification information of the first application and the data information of the first application in the first target component of a second size by using a second animation;
where, the first size is less than the second size.

Regarding the apparatus in the above embodiments, the specific manner in which each module performs operations has been described in detail in the embodiments of the method, and will not be elaborated here.

6 is a structural block diagram of an electronic device 600 according to some embodiments of the present invention. For example, the electronic device 600 may be a mobile phone, a computer, a digital broadcast terminal, a message transceiving device, a game console, a tablet device, a medical device, a fitness device, a personal digital assistant, etc.

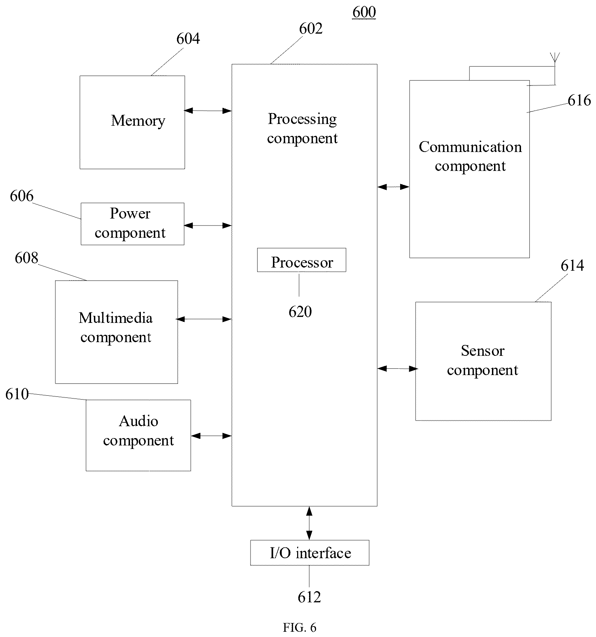

Referring to FIG. 6, the electronic device 600 may include one or more of the following components: a processing component 602, a memory 604, a power component 606, a multimedia component 608, an audio component 610, an input/output (I/O) interface 612, a sensor component 614, and a communication component 616.

The processing component 602 generally controls the overall operations of the electronic device 600, such as operations associated with at least one of display, phone calls, data communications, camera operations, and recording operations. The processing component 602 may include one or more processors 620 to execute instructions to perform all or part of the steps of the above-described method. In addition, the processing component 602 may include one or more modules to facilitate interaction between the processing component 602 and other components. For example, the processing component 602 may include a multimedia module to facilitate interaction between the multimedia component 608 and the processing component 602.

The memory 604 is configured to store various types of data to support operations on the electronic device 600. Examples of such data include at least one of the following: instructions for any application or method operating on the electronic device 600, contact data, phone book data, messages, pictures, and videos. The memory 604 may be implemented by any type of volatile or non-volatile memory device, or a combination of them, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 606 provides power to various components of the electronic device 600. The power component 606 may include at least one of the following: a power management system, one or more power supplies, and other components associated with generating, managing, and distributing power to the electronic device 600.

The multimedia component 608 includes a screen that provides an output interface between the electronic device 600 and the user. In some embodiments, the screen may include a liquid crystal display (LCD) and a touch panel (TP). If the screen includes a touch panel, it may be implemented as a touch screen to receive input signals from the user. The touch panel includes one or more touch sensors to sense touches, slides, and gestures on the touch panel. The touch sensors can detect not only the boundaries of a touch or slide operation, but also the duration and pressure associated with the touch or slide operation. In some embodiments, the multimedia component 608 includes a front camera and/or a rear camera. When the electronic device 600 is in an operating mode, such as a capture mode or a video mode, the front camera and/or the rear camera can receive external multimedia data. Each of the front camera and the rear camera can have a fixed optical lens system or have focal length and optical zoom capabilities.

The audio component 610 is configured to output and/or input audio signals. For example, the audio component 610 includes a microphone (MIC) configured to receive external audio signals when the electronic device 600 is in an operating mode, such as a call mode, a recording mode, or a voice recognition mode. The received audio signals may be further stored in the memory 604 or transmitted via the communication component 616. In some embodiments, the audio component 610 also includes a speaker for outputting audio signals.

The I/O interface 612 provides an interface between the processing component 602 and peripheral interface modules, such as a keyboard, click wheel, and buttons. These buttons may include, but are not limited to, a home button, a volume button, a start button, and a lock button.

The sensor component 614 includes one or more sensors for providing various state assessments for the electronic device 600. For example, the sensor component 614 may detect the open/closed state of the electronic device 600, and the relative positioning of components, such as the display and keypad of the electronic device 600. The sensor component 614 may also detect the position change of the electronic device 600 or a component of the electronic device 600, the presence or absence of user contact with the electronic device 600, the orientation or acceleration/deceleration of the electronic device 600, and the temperature change of the electronic device 600. The sensor component 614 may include a proximity sensor configured to detect the presence of nearby objects without any physical contact. The sensor component 614 may also include an optical sensor, such as a complementary metal oxide semiconductor (CMOS) or a charge coupled device (CCD) image sensor, for use in imaging applications. In some embodiments, the sensor component 614 may also include, but is not limited to, at least one of an acceleration sensor, a gyroscope sensor, a magnetic sensor, a pressure sensor, or a temperature sensor.

The communication component 616 is configured to facilitate wired or wireless communication between the electronic device 600 and other devices. The electronic device 600 can access a wireless network based on a communication standard, such as Wi-Fi, 4G, 5G, or a combination of them. In some embodiments, the communication component 616 receives broadcast signals or broadcast-related information from an external broadcast management system via a broadcast channel. In some embodiments, the communication component 616 also includes a near-field communication (NFC) module to facilitate short-range communications. For example, the NFC module may be implemented based on radio frequency identification (RFID) technology, infrared data association (IrDA) technology, ultra-wideband (UWB) technology, Bluetooth (BT) technology, or other technologies.

In some embodiments, the electronic device 600 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components.

In some embodiments, there is further provided a non-transitory computer-readable storage medium including an instruction, such as a memory 604 including an executable instruction or a computer program. The instruction or computer program may be executed by a processor 620 of the electronic device 600 to perform the above method. For example, the non-transitory computer-readable storage medium may be a ROM, a random access memory (RAM), a compact disc read-only memory (CD-ROM), a magnetic tape, a floppy disk, an optical data storage device, or the like.

The non-transitory computer-readable storage medium, when the instruction in the storage medium is executed by a processor of an electronic device, enables the electronic device to perform any of the above-mentioned display methods for the electronic device in the embodiments of the present invention. For example, the method includes:

in response to a first preset operation on a first application, displaying key information of the first application by using a first target component, where the first application includes a target application whose application type satisfies a first condition and/or whose running state satisfies a second condition, and the first target component is located at a first preset position on a display screen of the electronic device; and

in response to at least one second preset operation on the first target component, sending the key information of the first application and the information associated with the key information to a second application, where the second application is displayed on a display interface of the display screen.

The embodiments of the present invention provide a computer program product including a computer program or an executable instruction stored in a computer-readable storage medium. A processor of a computer device reads the computer program or the executable instruction from the computer-readable storage medium and executes the computer program or the executable instruction, causing the computer device to perform any of the above-mentioned display methods for the electronic device in embodiments of the present invention.

Other embodiments of the present invention will become apparent to those skilled in the art after considering the description and practicing the invention disclosed here. The present invention is intended to cover any variations, uses, or adaptations of the present invention that follow the general principles of the present invention and include common general knowledge or conventional technical means in the art not disclosed in the present invention. The description and examples are to be considered as exemplary only, with the true scope and spirit of the present invention being indicated by the following claims.

## Claims

1. A display method, performed by an electronic device, and comprising:
in response to a first preset operation on a first application, displaying (101) key information of the first application by using a first target component, wherein the first application comprises at least one of a target application whose application type satisfies a first condition or a target application whose running state satisfies a second condition, and the first target component is located at a first preset position on a display screen of the electronic device; and
in response to at least one second preset operation on the first target component, sending (102) the key information of the first application and information associated with the key information to a second application, wherein the second application is displayed on a display interface of the display screen.

2. The display method according to claim 1, wherein in response to the at least one second preset operation on the first target component, sending (102) the key information of the first application and the information associated with the key information to the second application comprises:
in response to a first operation on the first target component, displaying a first card in a floating manner on the display interface, wherein the first card comprises target key information matching a preset title of the first card, and the target key information is determined from the key information of the first application and the information associated with the key information; and
in response to a second operation on the first card, sending the first card to the second application;
optionally, the display method further comprises:
in response to a third operation on the first target component, displaying a second card in a floating manner on the display interface, wherein the second card comprises the key information of the first application and the information associated with the key information;
wherein a size of the second card is greater than a size of the first card.

3. The display method according to claim 2, wherein,
the display method further comprises:
in response to a fourth operation on the second card, displaying the first application in a small window form on the display interface; and
in response to a fifth operation on the first application in the small window form, sending the first application in the small window form to the second application;
or, the display method further comprises one of:
in response to the first card being displayed in a floating manner on the display interface, maintaining display of the key information of the first application in the first target component; or
in response to the second card being displayed in a floating manner on the display interface, removing the key information of the first application from the first target component.

4. The display method according to any one of claims 1 to 3, wherein in response to the first preset operation on the first application, displaying (101) the key information of the first application by using the first target component comprises:
in response to the first preset operation, and key information of a third application being displayed in the first target component, moving the key information of the third application from the first target component to a second target component for display, and displaying the key information of the first application in the first target component;
wherein a priority of the first application is higher than a priority of the third application, the second target component is located at a second preset position on the display screen of the electronic device, and the second preset position is different from the first preset position.

5. The display method according to any one of claims 1 to 4, wherein sending (102) the key information of the first application and the information associated with the key information to the second application comprises at least one of:
obtaining first information to be shared by converting the key information of the first application and the information associated with the key information into a format matching an edit box of the second application, and displaying the first information to be shared in the edit box; or
obtaining second information to be shared by converting the key information of the first application and the information associated with the key information into a format matching a dialog box of the second application, and displaying the second information to be shared in the dialog box.

6. The display method according to any one of claims 1 to 4, wherein in response to the first preset operation on the first application, displaying (101) the key information of the first application by using the first target component comprises at least one of:
in response to switching from an application interface of the first application to an application interface of a fourth application and the first application being in a running state, displaying at least one of an identification of the first application or running information indicated by the running state by using the first target component;
in response to triggering a message reminder event of the first application, displaying at least one of an identification of the first application or prompt information indicated by the message reminder event by using the first target component; or
in response to triggering a preset function of the first application, displaying at least one of an identification of the first application or a function identification indicated by the preset function by using the first target component.

7. The display method according to any one of claims 1 to 6, wherein in response to the first preset operation on the first application, displaying (101) the key information of the first application by using the first target component comprises:
in response to the first preset operation, obtaining the key information of the first application, wherein the key information of the first application comprises identification information of the first application and data information of the first application;
displaying the identification information of the first application in the first target component of a first size by using a first animation; and
simultaneously displaying the identification information of the first application and the data information of the first application in the first target component of a second size by using a second animation;
wherein, the first size is less than the second size.

8. A display apparatus (500), comprising:
a first display module (501), configured to display key information of a first application by using a first target component in response to a first preset operation on the first application, wherein the first application comprises at least one of a target application whose application type satisfies a first condition or a target application whose running state satisfies a second condition, and the target component is located at a first preset position on a display screen of an electronic device; and
a first execution module (502), configured to send the key information of the first application and information associated with the key information to a second application in response to at least one second preset operation on the first target component, wherein the second application is displayed on a display interface of the display screen.

9. The display apparatus (500) according to claim 8, wherein the first execution module (502) is configured to:
in response to a first operation on the first target component, display a first card in a floating manner on the display interface, wherein the first card comprises target key information matching a preset title of the first card, and the target key information is determined from the key information of the first application and the information associated with the key information; and
in response to a second operation on the first card, send the first card to the second application;
optionally, the display apparatus (500) further comprises:
a second display module, configured to display a second card in a floating manner on the display interface in response to a third operation on the first target component, wherein the second card comprises the key information of the first application and the information associated with the key information;
wherein a size of the second card is greater than a size of the first card.

10. The display apparatus (500) according to claim 9, wherein,
the display apparatus (500) further comprises:
a third display module, configured to display the first application in a small window form on the display interface in response to a fourth operation on the second card; and
a second execution module, configured to send the first application in the small window form to the second application in response to a fifth operation on the first application in the small window form;
or, the display apparatus (500) further comprises one of:
a fourth display module, configured to maintain display of the key information of the first application in the first target component in response to the first card being displayed in a floating manner on the display interface; or
a removal module, configured to remove the key information of the first application from the first target component in response to the second card being displayed in a floating manner on the display interface.

11. The display apparatus (500) according to any one of claims 8 to10, wherein the first display module (501) is configured to:
in response to the first preset operation, and key information of a third application being displayed in the first target component, move the key information of the third application from the first target component to a second target component for display, and display the key information of the first application in the first target component;
wherein a priority of the first application is higher than a priority of the third application, the second target component is located at a second preset position on the display screen of the electronic device, and the second preset position is different from the first preset position.

12. The display apparatus (500) according to any one of claims 8 to 11, wherein the first execution module (502) is further configured to perform at least one of:
obtaining first information to be shared by converting the key information of the first application and the information associated with the key information into a format matching an edit box of the second application, and displaying the first information to be shared in the edit box; or
obtaining second information to be shared by converting the key information of the first application and the information associated with the key information into a format matching a dialog box of the second application, and displaying the second information to be shared in the dialog box.

13. The display apparatus (500) according to any one of claims 8 to 12, wherein the first display module (501) is further configured to perform at least one of:
in response to switching from an application interface of the first application to an application interface of a fourth application and the first application being in a running state, displaying at least one of an identification of the first application or running information indicated by the running state by using the first target component;
in response to triggering a message reminder event of the first application, displaying at least one of an identification of the first application or prompt information indicated by the message reminder event by using the first target component; or
in response to triggering a preset function of the first application, displaying at least one of an identification of the first application or a function identification indicated by the preset function by using the first target component.

14. The display apparatus (500) according to any one of claims 8 to 12, wherein the first display module (501) is further configured to:
in response to the first preset operation, obtain the key information of the first application, wherein the key information of the first application comprises identification information of the first application and data information of the first application;
display the identification information of the first application in the first target component of a first size by using a first animation;
simultaneously display the identification information of the first application and the data information of the first application in the first target component of a second size by using a second animation;
wherein, the first size is less than the second size.

15. A non-transitory computer-readable storage medium, wherein the storage medium stores a computer program or an instruction, and when the computer program or the instruction in the storage medium is executed by a processor, steps of the method according to any one of claims 1 to 7 are implemented.
